# EUROPEAN PATENT APPLICATION

(11) **EP 4 113 100 A1**
(43) Date of publication of application: **04.01.2023**
(21) Application number: 21760502.1
(22) Date of filing: 07.01.2021
(51) Int. Cl.: G01N 15/02, G01N 1/04

(54) **PARTICLE SEPARATION DEVICE**

(30) Priority: 25.02.2020 JP 2020029201
(71) Applicant: NOK Corporation, Minato-ku, Tokyo 105-8585 (JP)
(72) Inventor: MUROTA, Yuki, Fujisawa-shi, Kanagawa 251-0042 (JP); YOSHITOMI, Takumi, Fujisawa-shi, Kanagawa 251-0042 (JP); FUJISAWA, Naohiro, Fujisawa-shi, Kanagawa 251-0042 (JP)
(74) Representative: Global IP Europe Patentanwaltskanzlei
(86) International application number: PCT/JP2021/000370
(87) International publication number: WO 2021/171794

(57) **Abstract**

A particle separating device includes at least three liquid chambers adapted to store a liquid therein; at least two liquid passages, each connecting adjacent two of the liquid chambers; an inlet adapted to introduce a liquid in which multiple particles of different sizes are dispersed into one of the liquid chambers; and at least two electrodes disposed inside at least two of the liquid chambers, respectively, the electrodes adapted to apply different electrical potentials to the liquid. The cross-sectional areas of the at least two liquid passages are different from each other.

## Description

### TECHNICAL FIELD

The present invention relates to particle separating devices for separating mixed particles of different sizes.

### BACKGROUND ART

A particle analysis device having two spaces has been proposed for analyzing particles, such as exosomes, pollens, viruses, and bacteria (Patent Documents 1-4). This type of particle analysis device has a pore connecting the two spaces, in which a liquid is stored in one space and another liquid containing particles to be analyzed is stored in the other space. These spaces are provided with different electrical potentials for causing electrophoresis, so that particles pass through the pore. As the particles pass through the pore, the current value flowing through the liquid changes. By observing the change in the current value, characteristics (e.g., type, shape, and size) of the particles that passed through the pore can be analyzed. For example, it is possible to determine the number of particles of a certain type contained in the liquid.

### BACKGROUND DOCUMENT(S)

Patent Document(s)
Patent Document 1: JP-A-2014-174022
Patent Document 2: JP-A-2017-156168
Patent Document 3: WO 2013/136430 A
Patent Document 4: WO 2013/137209 A

### SUMMARY OF THE INVENTION.

When analyzing a liquid in which multiple particles of different sizes are dispersed, it is useful to be able to easily separate particles of different sizes from those mixed in the liquid.

Accordingly, the present invention provides a particle separating device capable of easily separating particles of different sizes in a liquid in which multiple particles of different sizes are dispersed.

According to an aspect of the present invention, there is provided a particle separating device including at least three liquid chambers adapted to store a liquid therein; at least two liquid passages, each connecting adjacent two of the liquid chambers; an inlet adapted to introduce a liquid in which multiple particles of different sizes are dispersed into one of the liquid chambers; and at least two electrodes disposed inside at least two of the liquid chambers, respectively, the electrodes adapted to apply different electrical potentials to the liquid. The cross-sectional areas of the at least two liquid passages are different from each other.

In this aspect, particles contained in the liquid are attracted from one liquid chamber to another liquid chamber by electrophoresis caused the electrical potential difference applied to the electrodes. Particles having smaller sizes that can pass through a liquid passage can move from a liquid chamber to another liquid chamber, but particles having larger sizes remain in the original liquid chamber. The cross-sectional areas of the at least two liquid passages disposed between the at least three liquid chambers are different from each other, so that particles having at least three size classes can be distributed to the at least three liquid chambers. Therefore, it is possible to easily separate particles of different sizes in a liquid in which multiple particles of different sizes are dispersed.

### BRIEF DESCRIPTION OF THE DRAWINGS

FIG. 1 is a perspective view of a main assembly of a particle separating device according to an embodiment of the present invention;
FIG. 2 is an exploded a perspective view of the main assembly of FIG. 1;
FIG. 3 is a cross-sectional view of the main assembly of FIG. 1;
FIG. 4 is a schematic view of the particle separating device according to the embodiment in an initial stage of use;
FIG. 5 is a schematic view of the particle separating device in the next stage of FIG. 4;
FIG. 6 is a schematic view of the particle separating device in the next stage of FIG. 5;
FIG. 7 is a schematic view of the particle separating device in the next stage of FIG. 6; and
FIG. 8 is a schematic view of a particle separating device according to a modification of the embodiment of the present invention.

### DESCRIPTION OF EMBODIMENTS

Hereinafter, with reference to the accompanying drawings, an embodiment according to the present invention will be described. It is of note that the drawings are not necessarily to scale, and certain features may be exaggerated or omitted.

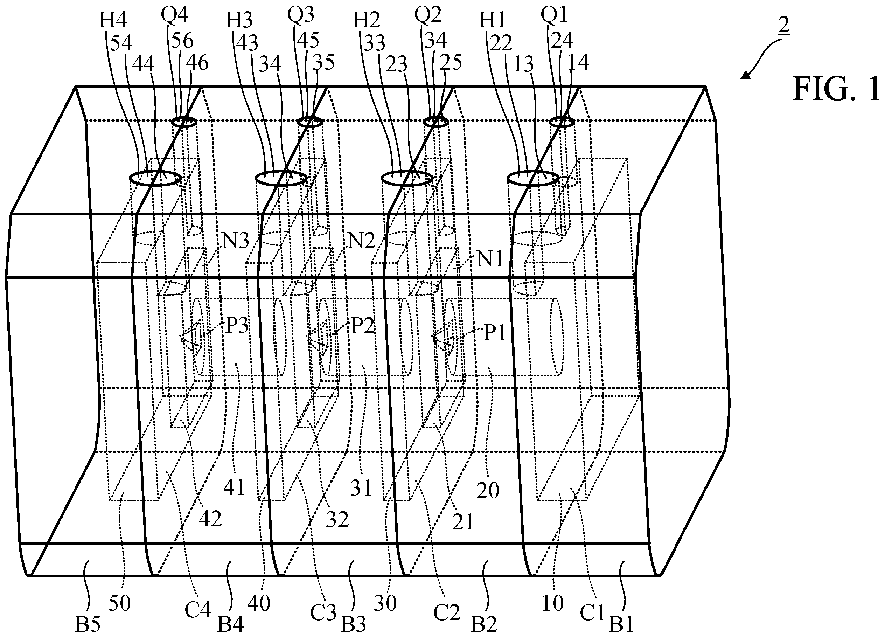

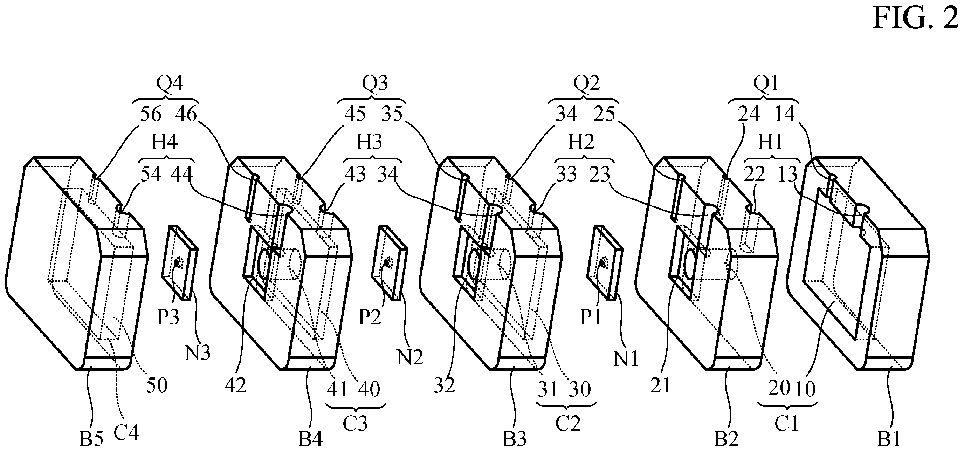

As shown in FIGS. 1, 2, and 3, a particle separating device in accordance with an embodiment of the present invention incudes a main assembly 2, which is a laminate having a plurality of panels or blocks.

The main assembly 2 includes five panels or blocks B1 to B5, four liquid chambers C1 to C4, and three liquid passages P1 to P3.

The blocks B1 to B5 have the same size as each other and have approximately rectangular parallelepiped contours. The liquid chambers C1 to C4 are provided between B1 to B5. Each of the liquid chambers C1 to C4 has an approximately rectangular parallelepiped shape and capable of storing a liquid.

The blocks B1 to B5 are formed from electrically and chemically inert and insulating materials. Each block may be formed from a rigid material or from an elastic material. Preferred rigid materials include resin materials, such as polycarbonate, polyethylene terephthalate, acrylic, cyclic olefin, polypropylene, polystyrene, polyester, and polyvinyl chloride. Preferred elastic materials include elastomers, for example, silicone rubber containing PDMS (polydimethylsiloxane) or urethane rubber. These blocks may be formed from the same material or from different materials.

These blocks B1 to B5 can be bonded together with an adhesive. However, in order to prevent or reduce undesirable inflow of organic matter into the liquid chambers C1 to C4, it is preferable to use irradiation of vacuum ultraviolet light or oxygen plasma to join the blocks B1 to B5.

On a surface of the first block B1, a recess 10 having an approximately rectangular parallelepiped shape is formed. The recess 10 is directed to the adjacent second block B2.

The second block B2 has a cylindrical hole 20 that communicates with the recess 10 and a rectangular parallelepiped recess 21 that communicates with the cylindrical hole 20. When the blocks B1 and B2 are joined together, the recess 10 and the cylindrical hole 20 form the first liquid chamber C1. The recess 21 is directed to the adjacent third block B3.

The third block B3 has a recess 30 having an approximately rectangular parallelepiped shape and communicating with the recess 21, a cylindrical hole 31 that communicates with the recess 30, and a rectangular parallelepiped recess 32 that communicates with the cylindrical hole 31. When the blocks B2 and B3 are joined together, the recess 30 and the cylindrical hole 31 form the second liquid chamber C2. The recess 32 is directed to the adjacent fourth block B4.

The fourth block B4 has a recess 40 having an approximately rectangular parallelepiped shape and communicating with the recess 32, a cylindrical hole 41 that communicates with the recess 40, and a rectangular parallelepiped recess 42 that communicates with the cylindrical hole 41. When the blocks B3 and B4 are joined together, the recess 40 and the cylindrical hole 41 form the third liquid chamber C3. The recess 42 is directed to the adjacent fifth block B5.

The fifth block B5 has a recess 50 having an approximately rectangular parallelepiped shape and communicating with the recess 42. When the blocks B4 and B5 are joined together, the recess 50 forms the fourth liquid chamber C4.

Rectangular parallelepiped nanopore chips N1, N2, and N3 are fitted into the recesses 21, 32, and 42, respectively. The liquid passages P1, P2, and P3 are formed in the nanopore chips N1, N2, and N3, respectively.

The nanopore chip N1 separates the first liquid chamber C1 from the second liquid chamber C2. The liquid passage (nanopore) P1, which penetrates the nanopore chip N1 in the thickness direction thereof, connects (i.e., communicates with) the first liquid chamber C1 and the second liquid chamber C2. In the embodiment, one liquid passage P1 is formed, but two or more liquid passages P1 may be formed in the nanopore chip N1.

The nanopore chip N2 separates the second liquid chamber C2 from the third liquid chamber C3. The liquid passage (nanopore) P2, which penetrates the nanopore chip N2 in the thickness direction thereof, connects (i.e., communicates with) the second liquid chamber C2 and the third liquid chamber C3. In the embodiment, one liquid passage P2 is formed, but two or more liquid passages P2 may be formed in the nanopore chip N2.

The nanopore chip N3 separates the third liquid chamber C3 from the fourth liquid chamber C4. The liquid passage (nanopore) P3, which penetrates the nanopore chip N3 in the thickness direction thereof, connects (i.e., communicates with) the third liquid chamber C3 and the fourth liquid chamber C4. In the embodiment, one liquid passage P3 is formed, but two or more liquid passages P3 may be formed in the nanopore chip N3.

The length, contour, cross-sectional shape, and location of each of the liquid passages P1, P2, and P3 are arbitrary and designed to be adapted to the use application of the particle separation device (e.g., characteristics of the particles to be separated). For example, each of the illustrated liquid passages P1, P2, and P3 has the shape of a truncated quadrangle pyramid, but may also be in the shape of a quadrangular prism, a cylinder, or a truncated cone.

The nanopore chips N1, N2, and N3 are made from an electrically and chemically inert and insulating material, such as glass, sapphire, a ceramic, a resin, an elastomer, SiO₂, SiN, or Al₂O₃. Preferably, each nanopore chip is made from a material harder than the material of the blocks B1 to B5, for example, glass, sapphire, ceramics, SiO₂, SiN, or Al₂O₃, but a resin or an elastomer may be used to form each nanopore chip. The nanopore chips may be formed from the same material or from different materials. The user may select appropriate respective nanopore chips depending on the application of the particle separation device.

Since the liquid chambers C1 to C4 are connected by the liquid passages P1 to P3, once liquid is introduced into one liquid chamber, the liquid flows into all other liquid chambers. As will be described later, particles contained in the liquid are attracted from one liquid chamber to another liquid chamber by electrophoresis caused by the electrical potential difference applied to the electrodes. Particles having smaller sizes that can pass through a liquid passage can move from a liquid chamber to another liquid chamber, but particles having larger sizes remain in the original liquid chamber. In other words, each of the liquid passages P1, P2, and P3 serves as a gateway between adjacent liquid chambers to filter the particles.

Among the liquid chambers C1 to C4, a liquid in which a plurality of particles of different sizes are dispersed is first introduced into the first liquid chamber C1. It is intended that by electrophoresis, smaller particles move from the first liquid chamber C1 to the second liquid chamber C2, that further smaller particles move from the second liquid chamber C2 to the third liquid chamber C3, and that further smaller particles move from the third liquid chamber C3 to the fourth liquid chamber C4. In other words, the first liquid chamber C1 is the most upstream side for particles in electrophoresis and the fourth liquid chamber C4 is the most downstream side.

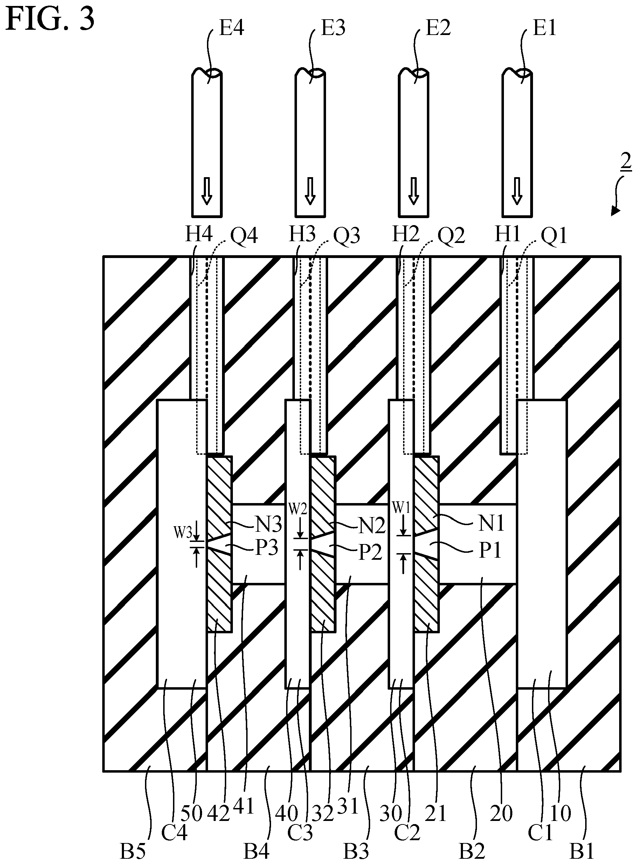

In the embodiment, the cross-sectional area of a liquid passage disposed downstream for particles is determined to be less than the cross-sectional area of an upstream liquid passage. FIG. 3 shows that the minimum width W2 of the liquid passage P2 is less than the minimum width W1 of the most upstream liquid passage P1, and that the minimum width W3 of the most downstream liquid passage P3 is less than the minimum width W2 of the liquid passage P2. (However, FIG. 3 shows the liquid passages P1 to P3 in an exaggerated manner, such that the widths W1, W2, and W3 are actually very small).

Thus, as a result of the electrophoretic migration of particles, four size classes of particles can be distributed to the four liquid chambers C1 to C4, respectively. That is to say, particles of the largest size class remain in the first liquid chamber C1, particles of the second largest size class particles remain in the second liquid chamber C2, the third largest size class particles remain in the third liquid chamber C3, and the smallest size class particles flow into the fourth liquid chamber C4. In this way, it is possible to easily separate particles of different sizes in a liquid in which multiple particles of different sizes are dispersed.

Four electrodes E1 to E4, which cause electrophoresis, are placed inside four liquid chambers C1 to C4, respectively. In the embodiment, each electrode is a cylindrical rod, but may have other shapes.

Electrode insertion holes H1 to H4 are formed in the main assembly 2, so that the electrodes E1 to E4 can be inserted into the electrode insertion holes H1 to H4, respectively.

The electrode insertion hole H1 extends from the top surface of the main assembly 2 and communicates with the recess 10 of the liquid chamber C1. The electrode insertion hole H1 consists of a semi-cylindrical groove 13 formed in the first block B1 and a semi-cylindrical groove 22 formed in the second block B2.

The electrode insertion hole H2 extends from the top surface of the main assembly 2 and communicates with the recess 30 of the liquid chamber C2. The electrode insertion hole H2 consists of a semi-cylindrical groove 23 formed in the second block B2 and a semi-cylindrical groove 33 formed in the third block B3.

The electrode insertion hole H3 extends from the top surface of the main assembly 2 and communicates with the recess 40 of the liquid chamber C3. The electrode insertion hole H3 consists of a semi-cylindrical groove 34 formed in the third block B3 and a semi-cylindrical groove 43 formed in the fourth block B4.

The electrode insertion hole H4 extends from the top surface of the main assembly 2 and communicates with the recess 50 of the liquid chamber C4. The electrode insertion hole H4 consists of a semi-cylindrical groove 44 formed in the fourth block B4 and a semi-cylindrical groove 54 formed in the fifth block B5.

Thus, an electrode is provided in each liquid chamber. The electrodes E1 to E4 may be detachable from the electrode insertion holes H1 to H4, or may be fixed to the electrode insertion holes H1 to H4.

Port Q1 to Q4 are formed in the main assembly 2. The ports Q1 to Q4 are used for outlets through which the liquid (containing particles as a result of particle separation by electrophoresis) is discharged from the liquid chambers C1 to C4. In the embodiment, each port is a cylindrical hole, but may have another shape.

The port Q1 extends from the top surface of the main assembly 2 and communicates with the recess 10 of the liquid chamber C1. Through the port Q1, liquid that may contain particles (particles G1 of the largest size class, which will be described later) can be drained from the liquid chamber C1. The port Q1 consists of a semi-cylindrical groove 14 formed in the first block B1 and a semi-cylindrical groove 24 formed in the second block B2.

The port Q2 extends from the top surface of the main assembly 2 and communicates with the recess 30 of the liquid chamber C2. Through the port Q2, liquid that may contain particles (particles G2 of the second largest size class, which will be described later) can be drained from the liquid chamber C2. The port Q2 consists of a semi-cylindrical groove 25 formed in the second block B2 and a semi-cylindrical groove 34 formed in the third block B3.

The port Q3 extends from the top surface of the main assembly 2 and communicates with the recess 40 of the liquid chamber C3. Through the port Q3, liquid that may contain particles (particles G3 of the third largest size class, which will be described later) can be drained from the liquid chamber C3. The port Q3 consists of a semi-cylindrical groove 35 formed in the third block B3 and a semi-cylindrical groove 45 formed in the fourth block B4.

The port Q4 extends from the top surface of the main assembly 2 and communicates with the recess 50 of the liquid chamber C4. Through the port Q4, liquid that may contain particles (particles G4 of the smallest size class, which will be described later) can be drained from the liquid chamber C4. The port Q4 consists of a semi-cylindrical groove 46 formed in the fourth block B4 and a semi-cylindrical groove 56 formed in the fifth block B5.

An example of a technique for removing liquid from the liquid chamber through the port is suction. For example, a tube (not shown) may be inserted into each port and liquid may be removed from the corresponding liquid chamber with a pump (not shown) connected to the tube. Alternatively, liquid may be removed from the liquid chamber with a syringe or pipette (not shown) of which the distal end is inserted into the corresponding port.

The port Q1, which communicates with the first liquid chamber C1, may be used for an inlet for introducing the liquid in which multiple particles of different sizes are dispersed. The liquid may be introduced with a tube inserted into the port Q1 or with a syringe or pipette of which the distal end is inserted into the port Q1.

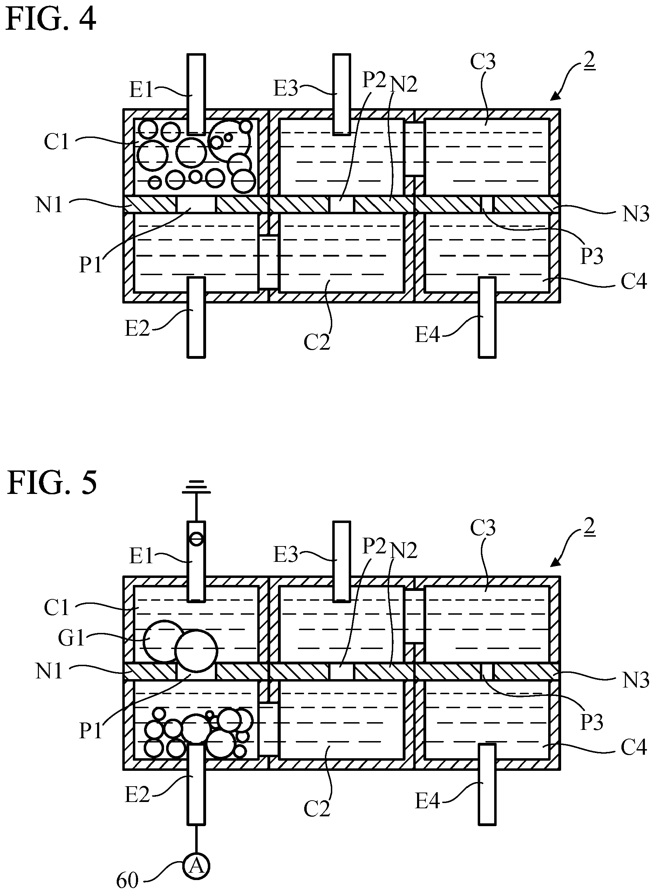

Referring now to FIGS. 4 to 7, a method of using the particle separating device according to the embodiment will be described. Each of FIGS. 4 to 7 is a schematic view of the particle separating device, and the relative positions and shapes of the elements differ from those in FIGS. 1 to 3. However, the relative position and shape of the elements are not important for the present invention and other relative positions and shapes may be adopted.

In this specification, "particles move into a/the liquid chamber" means that if the liquid contains particles having sizes that can pass through a liquid passage, which is a gateway for particles, the particles will move into the corresponding liquid chamber. If the liquid does not contain a particle of a size that can pass through a liquid passage, of course, there are no particles that can move.

Similarly, "particles remain in a/the liquid chamber" in the specification means that if the liquid contains particles having sizes that cannot pass through a liquid passage, the particles remain in the corresponding liquid chamber. If the liquid does not contain a particle of a size that cannot pass through a liquid passage, of course, there are no particles that can remain in the corresponding liquid chamber.

First, as shown in FIG. 4, the liquid in which multiple particles of different sizes are dispersed is introduced into the liquid chamber C1. Once the liquid is introduced into the liquid chamber C1, the liquid flows into all of the other liquid chambers C2, C3, and C4 through the liquid passages P1 to P3.

Next, a direct current is applied to the liquid in the liquid chambers C1 and C2 with use of the electrodes E1 and E2. As shown in FIG. 5, a negative electrical potential is given to the electrode E1 and a positive electrical potential is given to the electrode E2. By means of electrophoresis caused by the electrical potential difference given to the electrodes E1 and E2, particles contained in the liquid are attracted from the first liquid chamber C1 to the second liquid chamber C2. Electrophoresis causes particles having sizes that can pass through the liquid passage P1 to move from the first liquid chamber C1 to the second liquid chamber C2, but particles G1 of the largest size class that cannot pass through the liquid passage P1 remain in the first liquid chamber C1.

To ensure that all of the particles dispersed in the liquid introduced into the liquid chamber C1 pass through the liquid passage P1, the cross-sectional area of the liquid passage P1 can be designed to be large relative to the largest particle. In this case, no particles remain in the liquid chamber C1.

At the stage shown in FIG. 5, the value of the current flowing through the liquid may be measured with an ammeter 60 and the change in the current value may be observed and/or recorded. In this case, the particle separation device can be used as a particle analysis device that can efficiently separate and analyze particles. When the particles pass through the pore (liquid passage P1 in the stage of FIG. 5), the value of the current flowing through the liquid changes. By observing the change in the current value, characteristics (e.g., type, shape, and size) and the number of particles that have passed through the pore can be analyzed. At the stage shown in FIG. 5, particles of various sizes pass through the liquid passage P1. If the sizes of the particles passing through the liquid passage P1 is large relative to the cross-sectional area of the liquid passage P1, the change in the current value is large, and if the size of the particles passing through is small relative to the cross-sectional area of the liquid passage P1, the change in the current value is small. If the sizes of the particles passing through the liquid passage P1 is extremely small relative to the cross-sectional area of the liquid passage P1, the change in the current value is as small as noise and can be ignored.

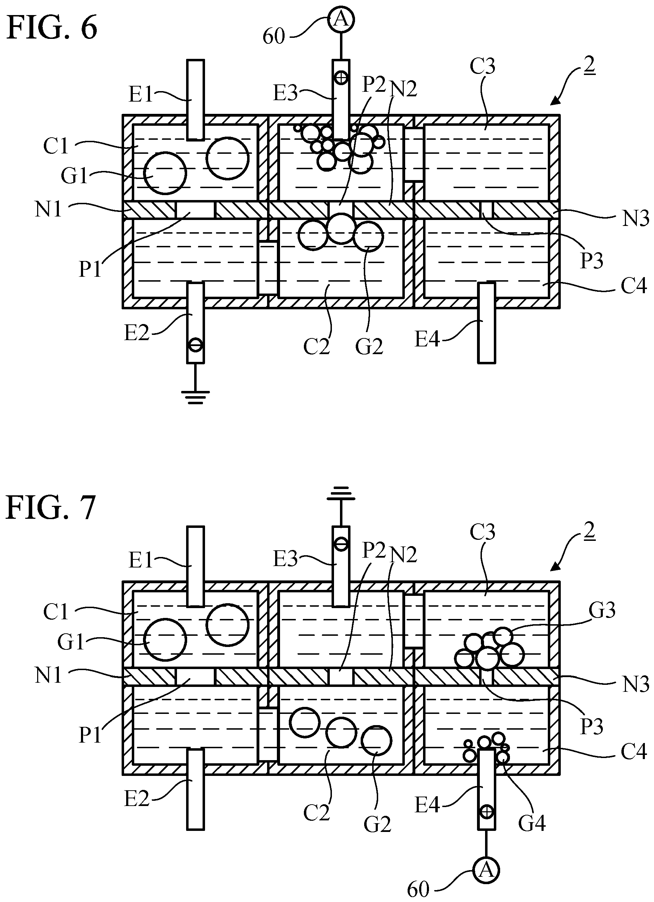

Next, a direct current is applied to the liquid in the liquid chambers C2 and C3 with use of the electrodes E2 and E3. As shown in FIG. 6, a negative potential is given to the electrode E2 and a positive potential is given to the electrode E3. By means of electrophoresis caused by the potential difference given to the electrodes E2 and E3, particles contained in the liquid are attracted from the second liquid chamber C2 to the third liquid chamber C3. Electrophoresis causes particles having sizes that can pass through the liquid passage P2 to move from the second liquid chamber C2 to the third liquid chamber C3, but particles G2 of the second largest size class that cannot pass through the liquid passage P2 remain in the second liquid chamber C2.

At the stage of FIG. 6, the value of the current flowing through the liquid may be measured with the ammeter 60 and the change in the current value may be observed and/or recorded. In this case, the particle separation device can be used as a particle analysis device that can efficiently separate and analyze particles. When the particles pass through the pore (liquid passage P2 in the stage of FIG. 6), the value of the current flowing through the liquid changes. By observing the change in the current value, characteristics and the number of particles that have passed through the pore can be analyzed.

Next, a direct current is applied to the liquid in the liquid chambers C3 and C4 with use of the electrodes E3 and E4. As shown in FIG. 7, a negative potential is given to the electrode E3 and a positive potential is given to the electrode E4. By means of electrophoresis caused by the potential difference given to the electrodes E3 and E4, particles contained in the liquid are attracted from the third liquid chamber C3 to the fourth liquid chamber C4. Electrophoresis causes particles G4 of the smallest size class that can pass through the liquid passage P3 to move from the third liquid chamber C3 to the fourth liquid chamber C4, but particles G3 of the third largest size class that cannot pass through the liquid passage P3 remain in the third liquid chamber C3.

At the stage of FIG. 7, the value of the current flowing through the liquid may be measured with the ammeter 60 and the change in the current value may be observed and/or recorded. In this case, the particle separation device can be used as a particle analysis device that can efficiently separate and analyze particles. When the particles pass through the pore (liquid passage P3 in the stage of FIG. 7), the value of the current flowing through the liquid changes. By observing the change in the current value, characteristics and the number of particles G4 that have passed through the pore can be analyzed.

As described above, the cross-sectional areas of the three liquid passages P1 to P3 disposed between the four liquid chambers C1 to C4 are different from each other, so that particles G1 to G4 having four size classes can be distributed to the four liquid chambers C1 to C4. Therefore, it is possible to easily separate particles of different sizes in a liquid in which multiple particles of different sizes are dispersed. The particles to be separated may be exosomes, pollens, viruses, bacteria, etc.

Specifically, the farther the liquid passage is from the port Q1, which is the inlet, the smaller the cross-sectional area of the liquid passage. Therefore, particles G1 of the largest size class remain in the liquid chamber C1 that is the closest to the port Q1, and particles G4 of the smallest size class move to the liquid chamber that is the farthest from the inlet.

The particle separating device according to the embodiment includes four ports Q1 to Q4 through which liquid can be drained from the four liquid chambers C1 to C4, respectively. Thus, the particles G1 to G4 having different size classes that have been distributed to the four liquid chambers C1 to C4 can be drained separately, and these particles can be analyzed.

In the embodiment, one electrode is provided in each liquid chamber. Thus, particles can be filtered in a stepwise manner as described above. That is to say, with use of two electrodes in each stage, electrophoresis can be performed in two adjacent liquid chambers corresponding to the electrodes. In addition, if necessary, the two electrodes in the adjacent liquid chambers can be used to measure the current value flowing through the liquid and analyze characteristics and/or the number of particles passing through the liquid passage between the liquid chambers.

The applicant produced a particle separation device according to the embodiment and conducted an experiment to confirm the particle separation function.

In the produced particle separating device, the nanopore chips N1, N2, and N3 were made of Si and the surface layers thereof were made of SiN. The shape of the liquid passages P1, P2, and P3 was cylindrical. The diameter of the liquid passage P1 was 3 micrometers, the diameter of the liquid passage P2 was 1.2 micrometers, and the diameter of the liquid passage P3 was 200 nanometers.

The liquid sample used in the experiments was PBS (phosphate buffered saline) in which three different polystyrene spherical particles of different diameters were dispersed. The PBS used was PBS (-) that does not contain calcium or magnesium. The diameters of the spherical particles were 2 micrometers, 750 nanometers, and 200 nanometers. The spherical particles were polystyrene beads manufactured by Polysciences, Inc. (Pennsylvania, USA). The electrodes E1 to E4 were silver-silver chloride electrodes. The liquid sample was supplied to the liquid chamber C1 through the port Q1.

In the experiment, the spherical particles with the diameter of 2 micrometers moved from the liquid chamber C1 to the liquid chamber C2 and remained in the liquid chamber C2. The spherical particles with the diameter of 750 nanometers moved from the liquid chamber C1 to the liquid chamber C3 via the liquid chamber C2 and remained in the liquid chamber C3. The particles with the diameter of 200 nanometers moved from the liquid chamber C1 through the liquid chambers C2 and C3 to the liquid chamber C4. Thus, the particle separation function of the particle separating device according to the embodiment was confirmed. In the experiment, changes in the current values could be observed when the particles passed through each liquid passage.

The present invention has been illustrated and described above with reference to preferred embodiments of the invention, but it will be understood by a person skilled in the art that changes in form and detail are possible without departing from the scope of the invention as set forth in the claims. Such changes, alterations and modifications should be encompassed within the scope of the invention.

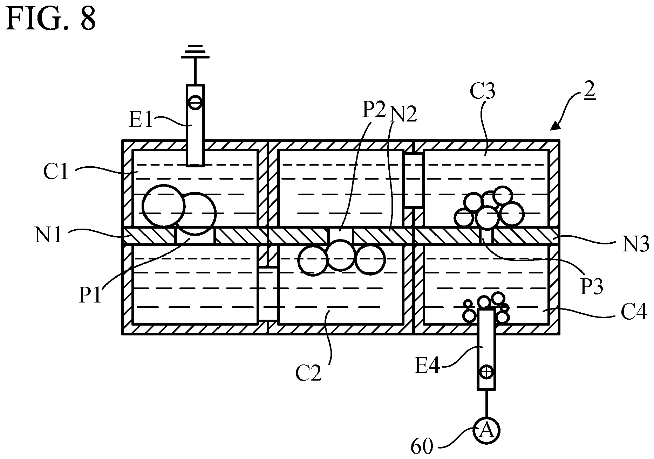

For example, in the above embodiment, one electrode is provided in each liquid chamber. However, as shown in FIG. 8, with use of an electrode E1 disposed in the first liquid chamber C1 on the most upstream side for the particles in electrophoresis and an electrode E4 disposed in the electrode E4 disposed in the fourth liquid chamber C4 on the most downstream side for the particles, a direct current may be applied to the liquid in the liquid chambers C1 to C4, and the electrodes E2 and E3 (and the electrode insertion holes H2 and H3) may be eliminated. In this case, particle separation, i.e., multi-stage filtering, can be performed at once, and the particles G1 to G4 having four size classes can be distributed to the four liquid chambers C1 to C4. Thus, the number of electrodes may be at least two.

In the modification of FIG. 8, the value of the current flowing through the liquid may also be measured with the ammeter 60 and the change in the current value may be observed and/or recorded. In this case, the particle separating device can be used as a particle analysis apparatus that can efficiently separate and analyze particles.

However, a plurality of electrodes E1 may be provided in the first liquid chamber C1 and, a plurality of electrodes E4 may be provided in the fourth liquid chamber C4. Furthermore, a plurality of electrodes may be provided in each liquid chamber. The multiple electrodes may be used to simultaneously measure multiple current values flowing through different portions of the liquid.

In the above embodiment, in addition to the electrode insertion holes H1 to H4, the ports Q1 to Q4 for discharging liquid from the liquid chambers C1 to C4 are provided. However, the ports Q1 to Q4 may be eliminated. In this case, if the electrodes E1 to E4 are detachable from the electrode insertion holes H1 to H4, the electrode insertion holes H1 to H4 can be used for outlets through which the liquid is discharged from the liquid chambers C1 to C4. In this case, the electrode insertion hole H1 may also be used for the inlet for introducing the liquid in which multiple particles of different sizes are dispersed.

The particle separating device according to the above embodiment has four liquid chambers C1 to C4 and three liquid passages P1 to P3. However, as a modification, the particle separating device may have three liquid chambers and two liquid passages. Alternatively, the particle separating device may have five or more liquid chambers and four or more liquid passages.

Aspects of the present invention are also set out in the following numbered clauses:
Clause 1. A particle separating device comprising:
   at least three liquid chambers adapted to store a liquid therein;
   at least two liquid passages, each connecting adjacent two of the liquid chambers;
   an inlet adapted to introduce a liquid in which multiple particles of different sizes are dispersed into one of the liquid chambers; and
   at least two electrodes disposed inside at least two of the liquid chambers, respectively, the electrodes adapted to apply different electrical potentials to the liquid, wherein cross-sectional areas of the at least two liquid passages are different from each other.
Clause 2. The particle separating device according to clause 1, wherein the farther each liquid passage is from the inlet, the smaller the cross-sectional area of the liquid passage.

According to this clause, the particles of the largest size remain in the liquid chamber that is the closest to the inlet, and the particles of the smallest size move to the liquid chamber that is the farthest from the inlet.

Clause 3. The particle separating device according to clause 1 or 2, further comprising multiple outlets adapted for discharging the liquid from insides of the liquid chambers, respectively.

According to this clause, particles distributed in at least three liquid chambers can be discharged separately and the particles can be analyzed.

Clause 4. The particle separating device according to any one of clauses 1 to 3, wherein at least one electrode is provided in each of the liquid chambers.

According to this clause, for example, with use of two electrodes provided in the first liquid chamber and the second liquid chamber, it is possible to cause particles that can pass through the liquid passage between the first liquid chamber and the second liquid chamber to move from the first liquid chamber to the second liquid chamber, and with use of two electrodes provided in the second liquid chamber and the third liquid chamber, it is possible to cause particles that can pass through the liquid passage between the second liquid chamber and the third liquid chamber to move from the second liquid chamber to the third liquid chamber. If necessary, the two electrodes in the adjacent two liquid chambers can be used to measure the value of the current flowing through the liquid and to analyze characteristics and/or the number of particles passing through the liquid passage between the liquid chambers.

### REFERENCE SYMBOLS

2: Main assembly
B1, B2, B3, B4, B5: Block
C1, C2, C3, C4: Liquid chamber
P1, P2, P3: Liquid passage
N1, N2, N3: Nanopore chip
E1, E2, E3, E4: Electrode
H1, H2, H3, H4: Electrode insertion hole
Q1, Q2, Q3, Q4: Port (outlet)
Q1: Port (inlet)
G1: Particles of largest size class
G2: Particles of second largest size class
G3: Particles of third largest size class
G4: Particles of smallest size class

## Claims

1. A particle separating device comprising:
at least three liquid chambers adapted to store a liquid therein;
at least two liquid passages, each connecting adjacent two of the liquid chambers;
an inlet adapted to introduce a liquid in which multiple particles of different sizes are dispersed into one of the liquid chambers; and
at least two electrodes disposed inside at least two of the liquid chambers, respectively, the electrodes adapted to apply different electrical potentials to the liquid, wherein cross-sectional areas of the at least two liquid passages are different from each other.

2. The particle separating device according to claim 1, wherein the farther each liquid passage is from the inlet, the smaller the cross-sectional area of the liquid passage.

3. The particle separating device according to claim 1 or 2, further comprising multiple outlets adapted for discharging the liquid from insides of the liquid chambers, respectively.

4. The particle separating device according to any one of claims 1 to 3, wherein at least one electrode is provided in each of the liquid chambers.
